# EUROPEAN PATENT SPECIFICATION

(11) **EP 0 426 681 B1**
(45) Date of publication and mention of the grant of the patent: **02.11.1995**
(21) Application number: 89905583.4
(22) Date of filing: 24.04.1989
(51) Int. Cl.: C09D 9/00, C11D 7/06

(54) **GELLING COMPOSITIONS FOR STRIPPING AND CLEANING**
GELIERENDE ZUSAMMENSETZUNGEN ZUM ABZIEHEN UND REINIGEN
COMPOSITIONS GELIFIANTES DE DECAPAGE ET DE NETTOYAGE

(30) Priority: 22.04.1988 AU 7907/88
(43) Date of publication of application: 15.05.1991
(73) Proprietor: LONCAR, Anthony, Mathew, Karrinyup, W.A. 6018 (AU); DAVIES, Gregory Donald, Perth, W.A. 6000 (AU); BROUGH, Thomas, Mt Lawley, W.A. 6050 (AU)
(72) Inventor: DAVIES, Gregory, Donald, Perth, W.A. 6000 (AU); BROUGH, Thomas, Mt Lawley, W.A. 6050 (AU)
(74) Representative: Pacitti, Pierpaolo A.M.E.
(86) International application number: AU8900178
(87) International publication number: WO8910388

(56) References cited:
- DE-A- 2 822 126
- DE-A- 3 338 027
- FR-A- 2 042 576
- GB-A- 2 014 584
- GB-A- 2 148 925
- US-A- 3 060 126
- US-A- 3 172 860
- US-A- 4 157 921
- US-A- 4 200 671
- US-A- 4 368 082
- US-A- 4 619 711
- US-A- 4 686 065

## Description

THIS INVENTION relates to chemical compositions for use as paint, oil or grease removers, cleaning agents, and other related applications.

In many applications where chemicals are used to clean, strip or otherwise act upon a surface, the effectiveness of the action of the chemicals is very much dependent upon contact between the chemicals and the surface.

In particular, with paint stripping compositions comprised of chlorinated hydrocarbons or aqueous caustic solutions, the use of these compositions is effective only on substantially horizontal surfaces because of the low viscosity. Additionally, any such solution is effective only for the duration that the solvent component remains unevaporated on the surface being acted upon. When evaporation occurs, a further application of the paint stripping composition is necessary to effectively continue the paint stripping operation. Further, due to the low viscosity of these compositions, it is difficult to confine their action to a particular portion of a surface which is required to be stripped or cleaned.

DE-A-3338027 discloses the use of potato flour as a thickening agent for a paint stripping composition. The disadvantage of this type of thickened paint stripping composition, although being an improvement over non thickened aqueous caustic compositions, is that it is still subject to running on substantially vertical surfaces and is still subject to loss of effectiveness due to evaporation of the solvent from the composition, the thickening agent not substantially slowing the rate of evaporation compared with similar aqueous caustic paint strippers which are not thickened.

It is an object of the present invention to provide a chemical composition which exhibits improved adhesive and solvent retention properties for use in stripping and cleaning applications.

In accordance with one aspect of the present invention there is provided a stripping and cleaning composition of gel-like consistency comprising a caustic alkaline solution and a synthetic polymeric substance, said composition formed by absorption of the caustic alkaline solution by the synthetic polymeric substance; characterised in that said synthetic polymeric substance comprises granular particles and is substantially aqueously-insoluble and capable of absorbing aqueous solution, said synthetic polymeric substance including one of the following:
- a cross-linked acrylamide polymer,
- a cross-linked methacrylamide polymer,
- a cross-linked co-polymer of acrylamide and acrylic acid,
- a cross-linked co-polymer of methacylamide and acrylic acid,
- a cross-linked co-polymer of methacrylamide and methacrylic acid,
- a cross-linked co-polymer of acrylamide and methacrylic acid.

The crosslinked polymer and crosslinked copolymer are as substantially described in Canadian Patent Specification Number 1200943. The preferred crosslinking agent of said crosslinked polymers is methylenebisacrylamide which is present in proportion of up to 10% by weight of the other monomer component(s) of the polymer.

The crosslinked acrylamide or methacrylamide polymer which further includes a copolymer of acrylamide and acrylic acid, with the weight ratio of acrylamide and acrylic acid in this copolymer preferably being 7:3, is as substantially described in United States Patent Specification Number 4579578. The preferred crosslinking agent of this croslinked acrylamide or methacrylamide polymer is methylenebisacrylamide which is present in the crosslinked polymer in proportion of up to 10% by weight.

Where said polymeric substance is a cross-linked acrylamide polymer or a cross-linked methacrylamide polymer, said composition may also comprise a binder of a water soluble co-polymer or acryamide and acrylic acid.

Preferably the particle size of said particles is between 50 and 200 microns.

Preferably the alkaline component of said aqueous alkaline solution is one of sodium hydroxide or potassium hydroxide.

Preferably said chemical composition further incorporates a component selected from the following:-
- a compound containing an ammonium group
- a compound containing an amine group
- an orgainic solvent
- a mixture of the above
Preferably said organic solvent is one of methylene chloride, acetone or methyl ethyl ketone.

Preferably said compound is one of urea or an ammonium compound such as ammonium nitrate.

Preferably the quantity of said organic solvent used is up to 20% by volume.

Preferably the quantity of said compound used is up to 25% by weight of the weight of said alkaline component.

### Modes for Carrying Out the Invention

The invention will be better understood by reference to the following specific examples:

### Example 1

Thirty grams of AGROSOKE polymer granules ground to a powder of particle size 100 to 125 microns were slowly added to a hot solution of eighty grams of sodium hydroxide dissolved in one litre of water, whilst stirring.

The mixture was stirred thoroughly every ten minutes to ensure that the polymer remained evenly dispersed within the solution. Absorption of the solution was complete in one hour.

The resulting chemical composition was found to have the following attributes:-
it spread easily on a surface to be stripped or cleaned and exhibited good adhesive properties in so far as that it did not run on or detach from vertical, overhead, or substantially inclined surfaces;
it exhibited an initial delayed acting effect which increased the handling safety;
it exhibited improved solvent retaining characteristics, when compared with non-polymeric thickened aqueous alkaline stripping and cleaning compositions or solvent based strippers or cleaners, which resulted in an extension of the time that the gel remained effective when in contact with the surface;
if the composition dried out due to being employed in extremes of temperature, low humidity or over a long period of time, it was reactivated simply by wetting, whereupon it continued to operate.

The chemical composition was found to be particularly suited for use in difficult applications such as the removal of graffiti from porous surfaces.

The effectiveness of the composition in difficult applications was improved further by the addition of 20g of a compound containing ammonium or amine groups such as urea or ammonium nitrate. These were added to the composition, prior to application to a surface, in crystaline or aqueous form. It is believed that the resultant reaction with the alkali releases ammonia into the aqueous medium within the gel which improves the effectiveness of the gel. A suitable amount to add was found to be approximately 25% by weight of the weight of the caustic alkali used in the composition.

Removal of certain coatings from surfaces, such as polyurethane paints was found to be aided by the addition of an organic solvent such as methylene chloride, acetone, or methyl ethyl ketone to the gel, in amount of up to 20% by volume.

### Example 2

The second example of the invention is directed toward a chemical composition for stripping paints and grease from surfaces in environments of high relative humidity or of low evapotranspiration. This example is produced in substantially the same manner as the first example except that the thirty grams of AGROSOKE polymer granules were ground to a smaller powder of a particle size of approximately 50 to 75 microns. The resulting chemical composition was faster acting in its stripping and cleaning properties, but its water retention properties were diminished when compared with the first example; hence its suitability for indoor applications, or high relative humidity applications.

In further embodiments, organic solvents such as acetone or methyl ethyl ketone are utilised instead of methylene chloride depending on the application.

It should be appreciated that the scope of the present invention is not limited to the particular embodiments described herein, and that the quantities of components of the chemical composition can be varied, and powder size can be varied.

## Claims

1. A stripping and cleaning composition of gel-like consistency comprising a caustic alkaline solution and a synthetic polymeric substance, said composition formed by absorption of the caustic alkaline solution by the synthetic polymeric substance; characterised in that said synthetic polymeric substance comprises granular particles and is substantially aqueously-insoluble and capable of absorbing aqueous solution, said synthetic polymeric substance including one of the following:
- a cross-linked acrylamide polymer,
- a cross-linked methacrylamide polymer,
- a cross-linked co-polymer of acrylamide and acrylic acid,
- a cross-linked co-polymer of methacylamide and acrylic acid,
a cross-linked co-polymer of methacrylamide and methacrylic acid,
- a cross-linked co-polymer of acrylamide and methacrylic acid.

2. A composition as claimed in Claim 1 wherein said synthetic polymeric substance is cross-linked with methylene bis-acrylamide.

3. A composition as claimed in Claim 2 wherein said synthetic polymeric substance is cross-linked with up to 10% by weight of methylene bis-acrylamide.

4. A chemical composition as claimed in Claim 1 where the acrylamide monomer, which forms said co-polymer of acrylamide and acrylic acid, is present in proportion 70% by weight, and the acrylic acid monomer, which forms said co-polymer of acrylamide and acrylic acid, is present in proportion 30% by weight.

5. A composition as claimed in any one of the preceding claims wherein said synthetic polymeric substance has a dried granular particle size lying between fifty microns and two hundred microns.

6. A composition as claimed in any one of the preceding claims wherein said polymeric substance is a cross-linked acrylamide polymer or a cross-linked methacrylamide polymer, said composition also comprising a binder, said binder being a water soluble co-polymer of acrylamide and acrylic acid.

7. A composition as claimed in any one of the preceding claims wherein said gel comprises eight parts by weight of a solid caustic alkali, one hundred parts by weight of water, and three parts by weight of said synthetic polymeric substance.

8. A chemical composition claimed in any of the preceding claims wherein the alkaline component of said aqueous alkaline solution is one of sodium hydroxide or potassium hydroxide.

9. A chemical composition as claimed in any of the preceding claims which further includes a compound containing ammonium or amine groups.

10. A chemical composition as claimed in Claim 9 wherein said compound is one of urea or ammonium nitrate.

11. A chemical composition as claimed in Claims 9 or 10 wherein the quantity of said compound used is up to 25% by weight of the weight of said alkaline component.

12. A chemical composition as claimed in any of the preceding claims which further includes an organic solvent.

13. A chemical composition as claimed in Claim 12 where said organic solvent is one of methylene chloride, propanone or butanone.

14. A chemical composition as claimed in Claims 12 or 13 wherein the quantity of said organic solvent used is up to 20% by volume.

15. Use of a composition as claimed in any of the preceding claims as a paint stripper, graffiti remover, grease stripper or industrial cleaner.

## Patentansprüche

1. Zusammensetzung von gelartiger Konsistenz zum Strippen oder Abziehen und Säubern, welche aus einer ätzalkalischen Lösung und einer synthetischen polymeren Substanz besteht, wobei die Zusammensetzung durch Absorption der ätzalkalischen Lösung durch die synthetische polymere Substanz gebildet ist; dadurch gekennzeichnet, daß die synthetische polymere Substanz körnige Teilchen aufweist und im wesentlichen wasserunlöslich ist und zum Absorbieren einer wässrigen Lösung fähig ist, wobei die synthetische polymere Substanz eine der folgenden Komponenten enthält;
- ein vernetztes Acrylamidpolymer,
- ein vernetztes Methacrylamidpolymer,
- ein vernetztes Copolymer von Acrylamid und Acrylsäure,
- ein vernetztes Copolymer von Methacrylamid und Acrylsäure,
- ein vernetzes Copolymer von Methacrylamid und Methacrylsäure,
- ein vernetztes Copolymer von Acrylamid und Methacrylsäure.

2. Zuammensetzung nach Anspruch 1, bei welcher die synthetische polymere Substanz mit Methylen-bis-acrylamid vernetzt ist.

3. Zusammensetzung nach Anspruch 2, bei welcher die synthetische polymere Substanz mit bis zu 10 Gew.-% Methylen-bis-acrylamid vernetzt ist.

4. Chemische Zusammensetzung nach Anspruch 1, bei welcher das Acrylamidmonomer, welches das Copolymer des Acrylamids und der Acrylsäure bildet, mit einem Anteil von 70 Gew.-% vorhanden ist, und das Acrylsäuremonomer, welches das Copolymer des Acrylamids und der Acrylsäure bildet, mit einem Anteil von 30 Gew.-% vorhanden ist.

5. Zusammensetzung nach einem der vorhergehenden Ansprüche, bei welcher die synthetische polymere Substanz eine getrocknete Formteilchengröße zwischen 50 Mikrons und 200 Mikrons aufweist.

6. Zusammensetzung nach einem der vorhergehenden Ansprüche, bei welcher die polymere Substanz ein vernetztes Acrylamidpolymer oder ein vernetztes Methacrylamidpolymer ist, wobei die Zusammensetzung auch ein Bindemittel aufweist, welches Bindemittel ein wasserlösliches Copolymer von Acrylamid und Acrylsäure ist.

7. Zusammensetzung nach einem der vorhergehenden Ansprüche, bei welcher das Gel aus acht Gewichtsteilen festes Alkalihydroxid, einhundert Gewichtsteilen Wasser und drei Gewichtsteilen der synthetischen polymeren Substanz besteht.

8. Chemische Zusammensetzung nach einem der vorhergehenden Ansprüche, bei welcher die alkalische Komponente der wässrigen Alkalilösung eine von Natriumhydroxid oder Kaliumhydroxid ist.

9. Chemische Zusammensetzung nach einem der vorhergehenden Ansprüche, welche weiterhin eine Verbindung einschließt, die Ammonium oder Amingruppen enthält.

10. Chemische Zusammensetzung nach Anspruch 9, bei welcher die Verbindung eine von Harnstoff oder Ammoniumnitrat ist.

11. Chemische Zusammensetzung nach Anspruch 9 oder 10, bei welcher die Menge der verwendeten Verbindung bis zu 25 Gew.-% des Gewichts der Alkalikomponente beträgt.

12. Chemische Zusammensetzung nach einem der vorhergehenden Ansprüche, welche weiterhin ein organisches Lösemittel enthält.

13. Chemische Zusammensetzung nach Anspruch 12, bei welcher das organische Lösungsmittel eines von Methylenchlorid, Propanon oder Butanon ist.

14. Chemische Zusammensetzung nach Anspruch 12 oder 13, bei welcher die Menge des verwendeten organischen Lösungsmittels bis zu 20 VOL-% beträgt.

15. Verwendung einer Zusammensetzung nach einem der vorhergehenden Ansprüche als ein Farbenlöser, ein Graffitientferner, ein Entfetter oder ein industrielles Säuberungsmittel.

## Revendications

1. Composition de décapage et de nettoyage ayant une consistance analogue à celle d'un gel, comprenant une solution alcaline caustique et une substance synthétique polymère, ladite composition, qui est formée par absorption de la solution alcaline caustique par la substance synthétique polymère, étant caractérisée en ce que ladite substance synthétique polymère comprend des particules granulaires et est essentiellement insoluble dans l'eau et capable d'absorber une solution aqueuse, ladite substance synthétique polymère comprenant l'un des produits suivants :
- polymère réticulé d'acrylamide,
- polymère réticulé de méthacrylamide,
- copolymère réticulé d'acrylamide et d'acide acrylique,
- copolymère réticulé de méthacrylamide et d'acide acrylique,
- copolymère réticulé de méthacrylamide et d'acide méthacrylique,
- copolymère réticulé d'acrylamide et d'acide méthacrylique.

2. Composition suivant la revendication 1, dans laquelle ladite substance synthétique polymère est réticulée au moyen de méthylène bis- acrylamide.

3. Composition suivant la revendication 2, dans laquelle ladite substance synthétique polymère est réticulée avec jusqu'à 10 % en poids de méthylène bis-acrylamide.

4. Composition suivant la revendication 1, dans laquelle ledit monomère acrylamide, qui forme ledit copolymère réticulé d'acrylamide et d'acide acrylique, est présent selon une proportion de 70 % en poids, et ledit monomère acide acrylique, qui forme ledit copolymère réticulé d'acrylamide et d'acide acrylique, est présent selon une proportion de 30 % en poids.

5. Composition suivant l'une quelconque des revendications précédentes, dans laquelle ladite substance synthétique polymère a à l'état sec une taille de particule granulaire se situant entre 50 µm et 200 µm.

6. Composition suivant l'une quelconque des revendications précédentes, dans laquelle ladite substance polymère est un polymère réticulé d'acrylamide ou un polymère réticulé de méthacrylamide, ladite composition comprenant en outre un liant, ledit liant étant un copolymère réticulé d'acrylamide et d'acide acrylique soluble dans l'eau.

7. Composition suivant l'une quelconque des revendications précédentes, se présentant sous forme gélifiée et comprenant 8 parties en poids d'alcali caustique solide, 100 parties en poids d'eau et 3 parties en poids de ladite substance synthétique polymère.

8. Composition suivant l'une quelconque des revendications précédentes, dans laquelle le composant alcalin de ladite solution alcaline aqueuse est l'hydroxyde de sodium ou l'hydroxyde de potassium.

9. Composition suivant l'une quelconque des revendications précédentes, comprenant en outre un composé contenant les groupes ammonium ou amine.

10. Composition suivant la revendication 9, dans laquelle ledit composé est l'urée ou le nitrate d'ammonium.

11. Composition suivant les revendications 9 ou 10, dans laquelle la quantité dudit composé va jusqu'à 25 % en poids par rapport au poids dudit composant alcalin.

12. Composition suivant l'une quelconque des revendications précédentes, comprenant en outre un solvant organique.

13. Composition suivant la revendication 12, dans laquelle ledit solvant organique est le chlorure de méthylène, le propanone ou la butanone.

14. Composition suivant les revendications 12 ou 13, dans laquelle la quantité dudit solvant organique va jusqu'à 20 % en volume.

15. Utilisation d'une composition suivant l'une quelconque des revendications précédentes, en tant que produit pour décaper les peintures, enlever les graffiti, décaper les graisses ou en tant que nettoyant industriel.
